# EUROPÄISCHE PATENTANMELDUNG

(11) **EP 3 890 363 A1**
(43) Veröffentlichungstag der Anmeldung: **06.10.2021**
(21) Anmeldenummer: 21158050.1
(22) Anmeldetag: 19.02.2021
(51) Int. Cl.: H04W 4/02

(54) **VERFAHREN ZUR INFORMATIONSÜBERMITTLUNG**

(30) Priorität: 02.04.2020 DE 102020109223
(71) Anmelder: Cyberschmiede GmbH, 87629 Füssen (DE)
(72) Erfinder: SOPPER, Roland, 70184 Stuttgart (DE); SAHLER, Benjamin, 70565 Stuttgart (DE); RIETZLER, Manfred, 10120 Bangkok (TH)
(74) Vertreter: advotec.

(57) **Zusammenfassung**

Die Erfindung betrifft ein Verfahren zur Informationsübermittlung zwischen einer Mehrzahl von in einem gemeinsamen Netzwerk angeordneten und über eine Netzwerkservereinrichtung miteinander verbundenen Mobilfunkgeräten, bei denen von zumindest zwei Sender-Mobilfunkgeräten ein Datensatztransfer von individuell auf den Sender-Mobilfunkgeräten erzeugten Datensätzen zur Netzwerkservereinrichtung und nachfolgend ein Datensatztransfer von der Netzwerkservereinrichtung zu zumindest einem Empfänger-Mobilfunkgerät erfolgt, wobei zur Bildung einer Ausgangs-Datensatzreihenfolge für die Anzeige der Datensätze bzw. der Nachrichtenbeiträge auf dem Empfänger-Mobilfunkgerät in Abhängigkeit von der Relativpositionierung der Sender-Mobilfunkgeräte zum Empfänger-Mobilfunkgerät die Reihenfolge der Datensätze geändert wird.

## Beschreibung

Die vorliegende Erfindung betrifft ein Verfahren zur Informationsübermittlung zwischen einer Mehrzahl von in einem gemeinsamen Netzwerk angeordneten und über eine Netzwerkservereinrichtung miteinander verbundenen Mobilfunkgeräten, bei dem von zumindest zwei Sender-Mobilfunkgeräten ein Datensatztransfer von individuell auf den Sender-Mobilfunkgeräten erzeugten Datensätzen zur Netzwerkservereinrichtung und nachfolgend ein Datensatztransfer von der Netzwerkservereinrichtung zu zumindest einem Empfänger-Mobilfunkgerät erfolgt, wobei die Datensätze neben einem Nachrichtenbeitrag die Positionsdaten des Sender-Mobilfunkgeräts als ein erstes Datensatzattribut und eine dem Nachrichtenbeitrag zugeordnete Zeitangabe als ein zweites Datensatzattribut umfassen, und die Datensätze in der Netzwerkservereinrichtung in Abhängigkeit von der Zeitangabe eine Zugangs-Datensatzreihenfolge bilden, wobei in einer Datenbearbeitungseinrichtung der Netzwerkservereinrichtung oder in einer mit der Netzwerkservereinrichtung verbundenen Datenbearbeitungseinrichtung die Zugangs-Datensatzreihenfolge bearbeitet wird, derart, dass zur Bildung einer Ausgangs-Datensatzreihenfolge für die Anzeige der Datensätze bzw. der Nachrichtenbeiträge auf dem Empfänger-Mobilfunkgerät in Abhängigkeit von der Relativpositionierung der Sender-Mobilfunkgeräte zum Empfänger-Mobilfunkgerät die Reihenfolge der Datensätze geändert wird und/oder eine Auswahl der Datensätze erfolgt.

Verfahren zur Informationsübermittlung zwischen einer Mehrzahl von in einem gemeinsamen Netzwerk angeordneten und über eine Netzwerkservereinrichtung miteinander verbundenen Nutzern, bei denen insbesondere zur Kommunikation zwischen den Nutzern Mobilfunkgeräte eingesetzt werden, sind in vielfachen Erscheinungsformen bekannt. Über die bekannten sozialen Netzwerke werden regelmäßig Informationen, insbesondere private Posts, in die Nutzergemeinschaft gegeben, wobei die Nutzer die Möglichkeit haben, persönliche Filter zu definieren, so dass für diese Nutzer die Möglichkeit besteht, die Menge der in das Netz gestellten Informationen hinsichtlich Informationen, die wegen ihres Inhalts grundsätzlich als relevant angesehen werden, einzugrenzen.

Aufgrund der dennoch unbegrenzten geographischen Verteilung der durch das Internet ermöglichten virtuellen Community, die dazu führt, dass Nutzer des sozialen Netzwerks, also Mitglieder dieser virtuellen Community, völlig unabhängig von ihrer lokalen Zuordnung dem Netzwerk angehören, ergibt sich jedoch immer noch für den Nutzer eine übermäßige Anzahl von Informationen, die schon aufgrund ihrer bloßen lokalen oder regionalen Irrelevanz als Informationsquelle für den Nutzer überflüssig sind und somit zu einer für den Nutzer nutzlosen Datenmenge führen.

Der vorliegenden Erfindung liegt daher die Aufgabe zugrunde, ein Verfahren zur Informationsübermittlung zwischen einer Mehrzahl von in einem gemeinsamen Netzwerk angeordneten und über eine Netzwerkservereinrichtung miteinander verbundenen Mobilfunkgeräten vorzuschlagen, das für den Nutzer eine erhöhte Informationsrelevanz ermöglicht.

Zur Lösung dieser Aufgabe weist das erfindungsgemäße Verfahren die Merkmale des Anspruchs 1 auf.

Erfindungsgemäß erfolgt von zumindest zwei Sender-Mobilfunkgeräten ein Datentransfer von individuell auf den Sender-Mobilfunkgeräten erzeugten Datensätzen zur Netzwerkservereinrichtung und nachfolgend ein Datentransfer von der Netzwerkservereinrichtung zu zumindest einem Empfänger-Mobilfunkgerät, wobei die Datensätze neben einem Nachrichtenbeitrag zumindest die Positionsdaten des Sender-Mobilfunkgeräts und eine dem Nachrichtenbeitrag zugeordnete Zeitangabe umfassen, und die Datensätze in der Netzwerkservereinrichtung in Abhängigkeit von der Zeitangabe eine Zugangs-Datensatzreihenfolge bilden, wobei in einer Datenbearbeitungseinrichtung der Netzwerkservereinrichtung oder in einer mit der Netzwerkservereinrichtung verbundenen Datenbearbeitungseinrichtung die Zugangs-Datensatzreihenfolge bearbeitet wird, derart, dass zur Bildung einer Ausgangs-Datensatzreihenfolge für die Anzeige der Datensätze bzw. der Nachrichtenbeiträge auf dem Empfänger-Mobilfunkgerät die Reihenfolge der Datensätze geändert wird und/oder eine Auswahl der Datensätze in Abhängigkeit von der Relativpositionierung der Sender-Mobilfunkgeräte zum Empfänger-Mobilfunkgerät erfolgt.

Bei dem erfindungsgemäßen Verfahren werden über die Netzwerkservereinrichtung Nachrichtenbeiträge von registrierten oder nicht registrierten Nutzern als Datensätze erfasst, die mit den Positionsdaten der Sender-Mobilfunkgeräte und den Zeitangaben betreffend die Abfassung der Nachrichtenbeiträge versehen sind. Um eine hohe Aktualität der Beiträge sicherzustellen, ist es möglich, die Datenbearbeitungseinrichtung so zu definieren, dass die Datensätze nur über einen definierten Zeitraum zur Weiterleitung zur Verfügung stehen.

Der besondere Vorteil des erfindungsgemäßen Verfahrens besteht darin, dass über die Verknüpfung der Positionsdaten der Sender-Mobilfunkgeräte mit den Nachrichtenbeiträgen der Sender-Mobilfunkgeräte und den bekannten Positionsdaten des zumindest einen Empfänger-Mobilfunk-gerätes eine Information betreffend die Relativpositionierung, insbesondere Entfernung, der Sender-Mobilfunkgeräte von dem zumindest einen Empfänger-Mobilfunkgerät zur Verfügung steht, die es ermöglicht, die Reihenfolge der von den unterschiedlichen Sender-Mobilfunkgeräten gesendeten Datensätze in der Datenbearbeitungseinrichtung entsprechend der jeweiligen Entfernung zwischen dem Sender-Mobilfunkgerät und dem Empfänger-Mobilfunkgerät zu sortieren, also in der Ausgangs-Datensatzreihenfolge eine Reihenfolge der Datensätze nicht entsprechend ihrer Zugangszeit zur Netzwerkservereinrichtung, sondern entsprechend der Entfernung der Sender-Mobilfunkgeräte von dem Empfänger-Mobilfunkgerät herzustellen, so dass etwa die Nachrichtenbeiträge des näheren Sender-Mobilfunkgerätes die höhere Priorität erhalten können.

Datensätze, die von Sender-Mobilfunkgeräten stammen, welche eine definierte Maximalentfernung zwischen einem Sender-Mobilfunkgerät und einem Empfänger-Mobilfunkgerät überschreiten, können aus der Ausgangs-Datensatzreihenfolge entfernt werden, so dass also lediglich solche Datensätze in der Ausgangs-Datensatzreihenfolge vorhanden sind, die von Sender-Mobilfunkgeräten stammen, welche nicht zu weit entfernt von dem Empfänger-Mobilfunkgerät angeordnet sind, und sichergestellt ist, dass etwa als gesprochener/geschriebener Text, Bild oder Video auf einem Sender-Mobilfunkgerät erzeugte Nachrichtenbeiträge auch einen entsprechenden lokalen oder regionalen Bezug für den Empfänger haben.

Ebenso ist es möglich, in der Datenbearbeitungseinrichtung eine Reihenfolge der Datensätze entsprechend ihrer Aktualität herzustellen, also für die Reihenfolge die den Nachrichtenbeiträgen zugeordnete Zeitangabe als Datensatzattribut für die Sortierung zu nutzen.

Die Begriffe Sender-Mobilfunkgerät und Empfänger-Mobilfunkgerät sind im Rahmen der vorliegenden Erfindung so zu verstehen, dass hiermit jeweils der aktuelle Status der am Verfahren beteiligten Mobilfunkgeräte bezeichnet ist, also bestimmte Mobilfunkgeräte, auf denen der Nachrichtenbeitrag erzeugt wird und die sich zu einem Zeitpunkt des Verfahrens im Sende-Status befinden, als Sender-Mobilfunkgeräte bezeichnet werden, wobei dieselben Mobilfunkgeräte zu einem anderen Zeitpunkt des Verfahrens sich im Empfangs-Status befinden können und dann als Empfänger-Mobilfunkgeräte fungieren.

Vorzugsweise erfolgt die Verbindung der Mobilfunkgeräte mit der Netzwerkservereinrichtung mittels einer Applikationssoftware, über die vom Empfänger-Mobilfunkgerät Datensätze von der Netzwerkservereinrichtung angefordert werden können, wobei über den jeweiligen Nutzer des Mobilfunkgeräts zumindest ein Datensatzattribut definierbar ist, das in der Datenbearbeitungseinrichtung hinterlegbar ist, wobei die Datenbearbeitungseinrichtung eine Auswerteeinheit umfasst, die die Datensätze auf Übereinstimmung mit dem Datensatzattribut prüft. Somit ist es möglich, neben den ohnehin als Datensatzattribute in den Datensätzen enthaltenen Positions- und Zeitangaben weitere über die App vom Nutzer definierte zusätzliche Datensatzattribute vorzusehen, mit denen beispielsweise für den Nutzer relevante Themenkreise definierbar sind, so dass die Menge der Datensätze in der Ausgangs-Datensatzreihenfolge noch weiter reduziert werden kann. Insbesondere ist es möglich, die Anzahl der Datensatzattribute entsprechend der definierten maximalen Entfernung zwischen den Sender-Mobilfunkgeräten und dem jeweiligen Empfänger-Mobilfunkgerät so einzustellen, dass eine zunehmende Filterung der Nachrichtenbeiträge mit steigender Entfernung vorgenommen wird.

Beispielsweise kann so festgelegt werden, dass Datensätze von Sender-Mobilfunkgeräten, die sich in einer Entfernung von weniger als 1 km vom Empfänger-Mobilfunkgerät befinden, grundsätzlich in der Ausgangs-Datensatzreihenfolge vorhanden sind, und Datensätze von Sender-Mobilfunkgeräten, die sich in einer Entfernung von mehr als 1 km vom Empfänger-Mobilfunkgerät befinden, nur dann in der Ausgangs-Datensatzreihenfolge vorhanden sind, wenn ein weiteres Datensatzattribut vorhanden ist, also etwa ein Wort-Nachrichtenbeitrag ein bestimmtes Stichwort aufweist, das somit als Filterkriterium für die Auswahl eines Datensatzes wirkt.

Wenn die Applikationssoftware eine Administratorebene aufweist für einen Administratorzugriff auf die Datenbearbeitungseinrichtung zur Definition weiterer Datensatzattribute, können auch unabhängig vom Nutzer des Empfänger-Mobilfunkgerätes Prioritäten für die Reihenfolge der Datensätze definiert werden, oder es kann ein Mischungsverhältnis zwischen lokalen, regionalen und überregionalen Nachrichtenbeiträgen vorgegeben werden. Darüber hinaus ist es somit dem Administrator auch möglich, über das Datensatzattribut die Versendung von Push-Nachrichten unabhängig von einer Anforderung durch den Nutzer des Empfänger-Mobilfunkgerätes einzustellen.

Vorzugsweise weist die Applikationssoftware eine Schnittstelle für einen Datensatztransfer mit einer externen Sendereinrichtung auf, derart, dass von der Sendereinrichtung externe Datensätze an die Datenbearbeitungseinrichtung übermittelbar sind. So können von externen Sendereinrichtungen kommerzielle Beiträge, also etwa an lokale Kunden gerichtete Werbung, in die Ausgangs-Datensatzreihenfolge eingekoppelt werden. Ebenso ist die Eingliederung amtlicher Nachrichten, wie etwa besondere an die Nutzer gerichtete Verhaltensregeln in einem Gefahrenfall, möglich.

Besonders bevorzugt ist es, wenn die Applikationssoftware eine Einrichtung zur Generierung von Datensatzattributen in Abhängigkeit vom Nutzerverhalten des Nutzers des Empfänger-Mobilfunkgerätes aufweist. Zur Generierung der Datensatzattribute können somit Methoden der Künstlichen Intelligenz eingesetzt werden, die es beispielsweise ermöglichen, von der Tageszeit abhängige unterschiedlich lange Abrufzeiten des Nutzers während des Empfangsstatus seines Mobilfunkgerätes bei der Generierung der Datensatzattribute zu berücksichtigen. So können etwa bei einem Nutzer, bei dem am frühen Morgen regelmäßig nur kurze Abrufzeiten anfallen, in denen Nachrichtenbeiträge von der Netzwerkservereinrichtung abgerufen werden, die Datensatzattribute so bestimmt werden, dass die Priorität bei regionalen oder überregionalen Nachrichtenbeiträgen liegt, wohingegen abends, wenn bei dem Nutzer regelmäßig längere Abrufzeiten festzustellen sind, der Schwerpunkt bei der Übermittlung von eher lokalen Nachrichtenbeiträgen liegt.

Wenn die Positionsdaten des Sender-Mobilfunkgerätes ein optionales Datensatzattribut des an das Empfänger-Mobilfunkgerät übermittelten Datensatzes sind, kann der Nutzer des Sender-Mobilfunkgerätes verhindern, dass seine persönlichen Positionsdaten dem Nutzer des Empfänger-Mobilfunkgerätes zusammen mit dem Nachrichtenbeitrag bekannt werden.

Obwohl sich das erfindungsgemäße Verfahren in besonders bevorzugter Weise für die Anwendung in Kombination mit Mobilfunkgeräten, also etwa insbesondere Smartphones, eignet, ist das erfindungsgemäße Verfahren ebenso verwirklicht, wenn anstelle von Mobilfunkgeräten stationär betriebene Geräte, also etwa mit geeigneten Schnittstellen versehene PCs, eingesetzt werden.

## Patentansprüche

1. Verfahren zur Informationsübermittlung zwischen einer Mehrzahl von in einem gemeinsamen Netzwerk angeordneten und über eine Netzwerkservereinrichtung miteinander verbundenen Mobilfunkgeräten, bei denen von zumindest zwei Sender-Mobilfunkgeräten ein Datensatztransfer von individuell auf den Sender-Mobilfunkgeräten erzeugten Datensätzen zur Netzwerkservereinrichtung und nachfolgend ein Datensatztransfer von der Netzwerkservereinrichtung zu zumindest einem Empfänger-Mobilfunkgerät erfolgt, wobei die Datensätze neben einem Nachrichtenbeitrag die Positionsdaten des Sender-Mobilfunkgerätes als ein erstes Datensatzattribut und eine dem Nachrichtenbeitrag zugeordnete Zeitangabe als ein zweites Datensatzattribut umfassen, und die Datensätze in der Netzwerkservereinrichtung in Abhängigkeit von der dem Nachrichtenbeitrag zugeordneten Zeitangabe eine Zugangs-Datensatzreihenfolge bilden, wobei in einer Datenbearbeitungseinrichtung der Netzwerkservereinrichtung oder in einer mit der Netzwerkservereinrichtung verbundenen Datenbearbeitungseinrichtung die Zugangs-Datensatzreihenfolge bearbeitet wird, derart, dass zur Bildung einer Ausgangs-Datensatzreihenfolge für die Anzeige der Datensätze bzw. der Nachrichtenbeiträge auf dem Empfänger-Mobilfunkgerät in Abhängigkeit von der Relativpositionierung der Sender-Mobilfunkgeräte zum Empfänger-Mobilfunkgerät die Reihenfolge der Datensätze geändert wird und/oder eine Auswahl der Datensätze erfolgt.

2. Verfahren nach Anspruch 1,
**dadurch gekennzeichnet,**
**dass** die Verbindung der Sender-Mobilfunkgeräte und der Empfänger-Mobilfunkgeräte mit der Netzwerkservereinrichtung mittels einer Applikationssoftware erfolgt, wobei über den Nutzer des Empfänger-Mobilfunkgeräts zumindest ein zusätzliches Datensatzattribut definierbar ist, das in der Datenbearbeitungseinrichtung hinterlegbar ist, wobei die Datenbearbeitungseinrichtung eine Auswerteeinheit umfasst, die die Zugangs-Datensätze auf Übereinstimmung mit dem Datensatzattribut prüft.

3. Verfahren nach Anspruch 1 oder 2,
**dadurch gekennzeichnet,**
**dass** die Applikationssoftware eine Administratorebene aufweist für einen Administratorzugriff auf die Datenbearbeitungseinrichtung zur Definition weiterer Datensatzattribute.

4. Verfahren nach einem der vorangehenden Ansprüche,
**dadurch gekennzeichnet,**
**dass** die Applikationssoftware eine Schnittstelle für einen Datensatztransfer mit einer externen Sendereinrichtung aufweist, derart, dass von der Sendereinrichtung externe Datensätze an die Datenbearbeitungseinrichtung übermittelbar sind.

5. Verfahren nach einem der vorangehenden Ansprüche,
**dadurch gekennzeichnet,**
**dass** die Applikationssoftware eine Einrichtung zur Generierung von Datensatzattributen in Abhängigkeit vom Nutzerverhalten des Nutzers des Empfänger-Mobilfunkgerätes aufweist.

6. Verfahren nach Anspruch 5,
**dadurch gekennzeichnet,**
**dass** bei der Generierung der Datensatzattribute Methoden der Künstlichen Intelligenz verwendet werden.

7. Verfahren nach einem der vorangehenden Ansprüche,
**dadurch gekennzeichnet,**
**dass** die Positionsdaten des Sender-Mobilfunkgerätes ein optionales Datensatzattribut des an das Empfänger-Mobilfunkgerät übermittelten Datensatzes sind.
